# EUROPÄISCHE PATENTANMELDUNG

(11) **EP 0 875 137 A2**
(43) Veröffentlichungstag der Anmeldung: **04.11.1998**
(21) Anmeldenummer: 98810364.4
(22) Anmeldetag: 27.04.1998
(51) Int. Cl.: A01G 13/10

(54) **Vorrichtung zum Schutz von Einzelpflanzen vor Schneckenfrass**

(30) Priorität: 28.04.1997 CH 982/97
(71) Anmelder: Bonomo, Monique, 8455 Rüdlingen (CH)
(72) Erfinder: Bonomo, Monique, 8455 Rüdlingen (CH)
(74) Vertreter: Riederer, Conrad A., Dr.

(57) **Zusammenfassung**

Ein Schutzring (25) zum Schutz einzelner Pflanzen gegen Schneckenfrass weist eine feste Wandung (31) und an deren oberem Rand eine Auskragung (33) auf. Die Auskragung weist nach aussen und unten. Der Schutzring (25) wird in den Erdboden gesteckt, damit er schneckendicht an das Erdreich anschliesst und nicht weggeblasen werden kann. Der Durchmesser entspricht dem Pflanzabstand der im Schutzring (25) zu pflanzenden Pflanze. Schutzringe können zu Schutzring-Töpfen gemacht werden, indem sie mit einem Boden versehen werden oder auch in Töpfe (41) eingesetzt werden, wobei die Töpfe (41) aus beständigem oder verrottbarem Material gefertigt sein können.

## Beschreibung

Die vorliegende Erfindung betrifft eine Vorrichtung zum Schutz von Einzelpflanzen vor Schneckenfrass mit einer den Standplatz der Pflanze umlaufenden und für Schnecken undurchdringlichen Wandung, an deren oberem Ende ein umlaufender Kragen nach aussen angeordnet ist, dessen Unterseite nach aussen abfallend ausgebildet ist.

Auf dem Markt sind seit geraumer Zeit sogenannte Schneckenzäune erhältlich, wie sie z.B. aus den schweizerischen Patentschriften Nr. 467 007 und 650 900 bekannt sind. Diese Schneckenzäune bestehen aus einer Mehrzahl von geraden oder winkelförmigen Elementen mit einem nach aussen abgebogenen oberen Rand, welcher mit einem Winkel von wenigstens 30° nach unten geneigt ist. Mit diesen Schneckenzäunen werden ganze Gärten oder Pflanzbeete eingezäunt, so dass von ausserhalb des Gartens keine oder wenigsten nur wenige Schnecken zuwandern können. Solche Schneckenzäune müssen, sollen sie auf die Dauer dicht halten, bis zu einer gewissen Höhe in den Boden eingegraben werden. Der Hobbygärtner hat aber auch das Bedürfnis einzelne Pflanzen, z.B. mitten im Rasen oder in Töpfen, aber auch ganze Reihen von Salatköpfen zum Beispiel einzeln zu schützen. Dazu sind diese bekannten Schneckenzäune nicht geeignet.

Seit kurzer Zeit ist ein Produkt auf dem Markt, das einzelne Pflanzen vor Schneckenfrass schützen soll. Dieser sogenannte Pflanzenkragen besteht aus einer transparenten, zum Teil grün bedruckten Kunststoff-Hartfolie, welche um eine einzelne Pflanze gelegt werden kann. Die Folie ist als ein Band ausgestaltet. Dieses Band läuft um den Fuss der Pflanze, wobei das Ende des Bandes den Anfang überlappt. Von unten nach oben strebt das Band im Querschnitt konisch auseinander, um mit einem Knick schliesslich seine Richtung zu ändern. Von diesem Knick weg verläuft das Band im Querschnitt nach aussen und unten. Es bildet so eine Wandung mit Vordach, Auskragung oder Schrägfläche, welche tatsächlich ein Schneckenhindernis darstellen kann. Um diesen Pflanzenkragen um eine Pflanze zu legen, z.B. einen Salatkopf, wird das Folienband entsprechend der Grösse des Salatkopfes aufgedehnt und um den Fuss der Pflanze gelegt. Dabei wölbt sich die Folie aufgrund ihrer Geometrie ab einem bestimmten Durchmesser auf und lässt sich nicht mehr eben um den Salatkopf legen. Die am Fuss der Pflanze angeordnete Folie wird dann mit einem Stäbchen fixiert. Im Knickbereich der Folie sind dazu Löcher angebracht. Das Stäbchen wird nun im überlappenden Bereich durch die Löcher des Anfangs und des Endes des Folienbandes gesteckt, wodurch der Radius des Kragens fixiert ist. Dann wird das Stäbchen weiter in das Erdreich gesteckt, wodurch der ganze Kragen vor Verrücken und Verwehen geschützt sein soll.

Nachteilig an diesem Pflanzenkragen ist seine Flexibilität. Sie hat zwar im Zusammenhang mit der Ausformung des Kragens als Band den Vorteil, dass ein Folienkragen um eine Pflanze herumgelegt oder von einer Pflanze entfernt werden kann, ohne dass der Kragen über die Pflanze gesteckt oder gezogen werden muss. Weil die Geometrie der Folie aber eigentlich nur einen bestimmten Radius erlaubt, ohne dass der Folienkranz sich verformt, erlaubt die Form des Kragens es nicht, auf unterschiedliche Radien Rücksicht zu nehmen. Die Flexibilität würde aber dann einen besonderen Nutzen bringen, wenn dadurch der Radius des Pflanzenkragens verstellt werden könnte. Die Flexibilität hat nun aber den Nachteil, dass auf die Folie drückende Pflanzenteile, z.B. ein hängendes Blatt oder ein grosser Salatkopf, den Kragen wenigstens an einer Stelle zur Erde zu drücken vermag. An dieser Stelle nun ist der Damm gegen die Schnecken undicht geworden und die Schnecken vergreifen sich in der Folge an der für sie nicht bestimmten Delikatesse. Nachteilig ist, dass wegen der Flexibilität des Pflanzenkragens dieser nicht in die Erde steckbar ist. Will man ihn nämlich ins Erdreich einstecken, weicht er dem Druck aus und verbiegt sich. Abgesehen davon ist der vertikale Abstand zwischen unterster Kante des Folienkragens und äusserster Kante des Kragens so gering, dass ein Einstecken schon deshalb nicht in Frage kommt, will man den äussersten Rand des Kragens nicht in Berührung mit dem Erdreich bringen und so den Schnecken eine Schneckenrampe zum Schlemmermahl bereiten. Weil der Kragen nicht ins Erdreich gesteckt werden kann, besteht auch immer die Gefahr, dass zwischen Erdreich und Pflanzenkragen Durchlässe offenbleiben, die von den Schnecken genutzt werden. Wegen dieser Schwachstellen ist es erforderlich, die Pflanzenkragen regelmässig auf Dichtheit gegen Schnecken zu überprüfen, was dem Hobbygärtner nicht die ersehnte Sicherheit bringt. Ein weiterer Nachteil des Pflanzenkragens besteht darin, dass er an einer Stelle, zu der die Schnecken hingelangen können, Löcher aufweist. Diese Löcher werden zum fixieren des Kragens mittels hindurchgesteckter Stäbchen benötigt, ermöglichen aber gleichzeitig den kleinsten Nacktschnecken ungehinderten Zugang zur begehrten Pflanze, was spätestens beim Waschen des Salats zu unliebsamen Überraschungen führen kann.

Es ist deshalb Aufgabe der Erfindung eine Vorrichtung zum Schutz einzelner Pflanzen vor Schneckenfrass zu schaffen, welche diese angeführten Nachteile nicht aufweist. Insbesondere soll die Vorrichtung ins Erdreich einsteckbar sein, damit der Anschluss ans Erdreich schneckendicht ist und die Vorrichtung vor Verwehung und Verschiebung geschützt ist. Zudem soll die Vorrichtung keine Löcher aufweisen, durch welche kleine Schnecken hindurchkriechen können.

Erfindungsgemäss wird dies dadurch erreicht, dass die Wandung einen unveränderbaren Umfang und eine ausreichende Festigkeit und Steifheit zum Einstecken der Wandung in Erdreich aufweist. Dadurch lässt sich die Vorrichtung zum Schutz einzelner Pflanzen vor Schneckenfrass, im Folgenden Schutzring (später in veränderten Ausführungen auch Schutzring-Topf oder Schutztopf) genannt, in den Boden stecken. Dadurch ist der Anschluss des Schutzringes an das Erdreich schneckendicht, der Schutzring hält so ins Erdreich gesteckt auch starken Windböen stand und kann von im Garten sich tummelnden Katzen oder Igeln nicht aus seiner schützenden Stellung verschoben werden.

Vorteilhaft ist die Wandung so ausgestaltet, dass der von ihr umfasste Innenraum nach unten konisch verengt ist. Dadurch sind mehrere Schutzringe ineinander steckbar und dadurch wiederum auf kleinem Raum stapelbar.

Vorteilhaft weist der Schutzring einen einsetzbaren Boden mit einem umlaufenden Rand und einen dem Rand entsprechenden Sitz in der Wandung auf. Der Boden kann in einer Nut oder Kerbe in der Wandung sitzen oder eine Nut oder Kerbe für einen entsprechenden Kamm oder eine entsprechende Ausbuchtung in der Wandung aufweisen. Durch eine bevorzugte konische Form des Schutzringes kann ein Boden leicht im Innenraum eingesetzt oder aussen aufgesteckt werden. Durch diesen einsetzbaren Boden ist der Schutzring auch als Blumentopf, im Folgenden Schutzring-Topf genannt, verwendbar. Im Schutzring-Topf können nun Jungpflanzen gezogen werden oder es kann darin direkt ausgesät werden. Soll nun die darin gross gewordene Pflanze in den Garten gesetzt werden, braucht sie nicht umgetopft zu werden. Es muss lediglich der Boden entfernt werden, dann kann die Pflanze mit dem Schutzring ins Erdreich gesetzt werden.

Eine Mehrzahl solcher Schutzring-Töpfe sind für den Verkauf von Setzlingen zweckmässigerweise zu Setzlingsschalen zusammengefasst. Solche Setzlingsschalen weisen gewöhnlich 4 bis 6 Vertiefungen mit je 1 bis 2 darin eingesetzten Setzlingen auf. Die Kanten der Kragen sind zur Bildung solcher Schalen vorteilhaft über brechbare Verbindungen verbunden. Die Form des Schutzring-Topfes kann dabei vorteilhaft vier-, sechs- oder achtkantig sein. Die Berührungspunkte oder Berührungsstrecken sind zur Bildung von brechbaren Verbindungen in einer wesentlich dünneren Materialstärke als die Kragen gefertigt. Für das Setzen der Setzlinge braucht man somit nur die einzelnen Schutzring-Töpfe auseinanderzubrechen, so wie man z.B. an ihrem Rand verbundene Yoghurtbecher auseinanderbricht, einen allfälligen nicht verrottbaren Boden entfernen und die Setzlingen zusammen mit dem Schutzring in vorbereitete Vertiefungen im Erdreich stecken. Damit die Wandungen mit den Kragen nach dem Setzen des Setzlings soweit aus dem Erdreich herausgezogen werden können, dass der Kragen zum Erdreich den nötigen Abstand aufweist, sind die Wandungen vorteilhaft praktisch senkrecht, beziehungsweise etwa parallel zueinander.

Vorteilhaft ist Boden und Bodenrand zusammen als Topf ausgebildet. Die Wandung des Schutzringes muss dadurch nicht die ganze Topfhöhe aufweisen, sondern muss nur eine Höhe aufweisen, die bei der in den Garten gesetzten Pflanze den Anschluss an das Erdreich gewährleistet. Zweckmässigerweise entspricht die Form des Bodenrandes der Form der Wandung des Schutzringes. Der Boden mit topfförmigem Rand kann dabei von aussen auf die Wandung oder von innen in die Wandung des Schutzringes gesteckt sein.

Vorteilhaft entspricht der äusserste Durchmesser der Auskragung dem Pflanzabstand einer bestimmten Pflanze. Diese unterschiedlichen Abstände werden dadurch ohne Messen und Schätzen eingehalten und gewähren der Pflanze ihren idealen Spielraum. Es wird dadurch auch eine sehr dichte Setzlingsanordnung erleichtert, indem sich eine platzsparende Aufreihung der Schutzringe durch Versetzen nebeneinander angeordneter Reihen beinahe von selbst anbietet. Eine solche Anordnung der Schutzringe bewirkt, dass eine Pflanze zu den zwei nächstliegenden Pflanzen in einer benachbarten Reihe den gleichen Abstand hat und die dazwischen liegenden Gartenbeetflächen sehr klein ausfallen.

Vorteilhaft besteht der Boden des Schutzringes aus verrottbarem Material. Dadurch braucht er beim Setzen der Pflanze in den Garten nicht entfernt zu werden, sondern wird im feuchten Klima der Erde für die Wurzeln der Pflanze durchdringbar.

Vorteilhaft sind die Abmessungen des Schutzringes auf die Abmessungen im Handel erhältlicher Töpfe abgestimmt. Dadurch lassen sich Schutzringe auch auf Töpfe stecken und damit Topfpflanzen vor Schneckenfrass schützen.

Soll die Pflanze nicht in den Garten gesetzt werden, sondern vorläufig in einem Topf verbleiben, so weist vorteilhaft der Schutzring einen mit der Wandung zusammenhängenden Boden auf und ist dadurch als Topf ausgebildet. Es ist deshalb auch zweckmässig Pflanztöpfe mit einem Schutzkragen auszubilden, welcher Schnecken fernhält. Dieser Kragen kann auf der Oberseite ähnlich wie ein herkömmlicher Tontopf ausgebildet sein, kann aber auch eine Verzierung oder aber nur seine technisch bedingte Form aufweisen.

Vorteilhaft ist eine für die Schnecken zugängliche Oberfläche der Vorrichtung, d.h. die Aussenseite der Wandung und die Unterseite des Kragens, umlaufend wenigstens teilweise mit einer schneckenabweisenden Oberfläche versehen. Unter "schneckenabweisend" ist insbesondere eine Behaarung oder Aufrauhung, eine Velourbeschichtung, eine Vielzahl von dicht nebeneinander angeordnete Dornen, Brauen oder Rippen zu verstehen.

Vorteilhaft ist der äussere Rand des Kragens gezackt.

Nachfolgend werden Ausführungsbeispiele der Erfindung unter Bezugnahme auf die Figuren beschrieben. Es zeigt:
- Fig. 1: einen dem Stand der Technik entsprechenden Pflanzenkragen,
- Fig. 2: einen Schutzring in perspektivischer Ansicht,
- Fig. 3: einen Schutzring im Querschnitt, mit Pflanze und im Erdreich,
- Fig. 4: einen Schutzring-Topf mit von innen eingesetztem Boden im Querschnitt,
- Fig. 5: einen Schutzring-Topf mit von aussen aufgestecktem Topf im Querschnitt,
- Fig. 6: einen Ton-Schutztopf mit schmückendem Schutzkragen, z.T. in der Ansicht, z.T. im Schnitt.
- Fig. 7: zwei über eine Bruchkante verbundenen Schutzringtopf-Saatschalen mit gezacktem Rand des Kragens.
- Fig. 8a: einen Schnitt und
- Fig. 8b: einen Ausschnitt einer Ansicht eines Schutzrings mit behaarten Oberflächen,
- Fig. 9a: einen Schnitt und
- Fig. 9b: einen Ausschnitt einer Ansicht eines Schutzrings mit horizontal verlaufenden Lamellen,
- Fig. 10a: einen Schnitt und
- Fig. 10b: einen Ausschnitt einer Ansicht eines Schutzrings mit vertikal verlaufenden Lamellen an Wandung und Kragen,
- Fig 11: einen Ausschnitt eines Horizontalschnittes durch die gefaltete Wandung eines Schutzrings,
- Fig. 12: einen Vertikalschnitt durch den Schutzring gem. Fig. 11.

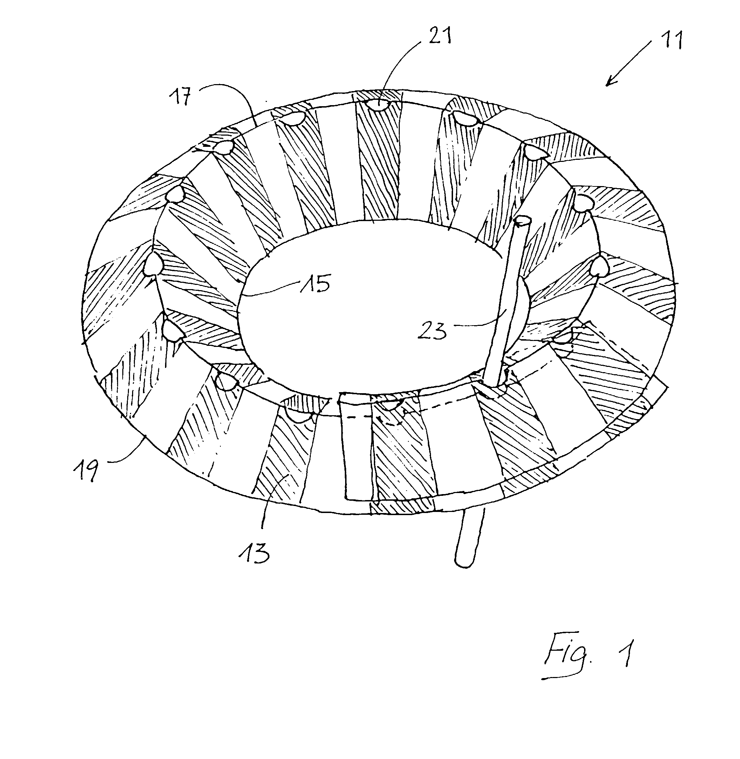

Die international als Modell geschützten sogenannten Pflanzenkragen 11, wie einer davon in der Abbildung 1 dargestellt ist, sind aus einer flexiblen Hartfolie gefertigt. Diese Hartfolie ist transparent und mit Streifen 13 grüner Farbe bedruckt. Der Pflanzenkragen 11 ist kreisrund und so gefalzt, dass die Folie im Querschnitt von Ihrem Fuss 15 konisch aufsteigt bis zu dem Falz 17, von wo aus sie konisch nach aussen und unten läuft. Der äusserste Rand 19 liegt somit tiefer als der Knick oder Falz 17, jedoch höher als der Fuss 15. Im Knick 17 sind eine Reihe von Löchern 21 angeordnet. Durch diese Löcher kann zur Fixierung der Folie ein Stäbchen 23 gesteckt werden. Dieses Stäbchen 23 fixiert damit den Radius des Kragens 11, und, in die Erde gesteckt, den ganzen Kragen 11 an seiner Stelle.

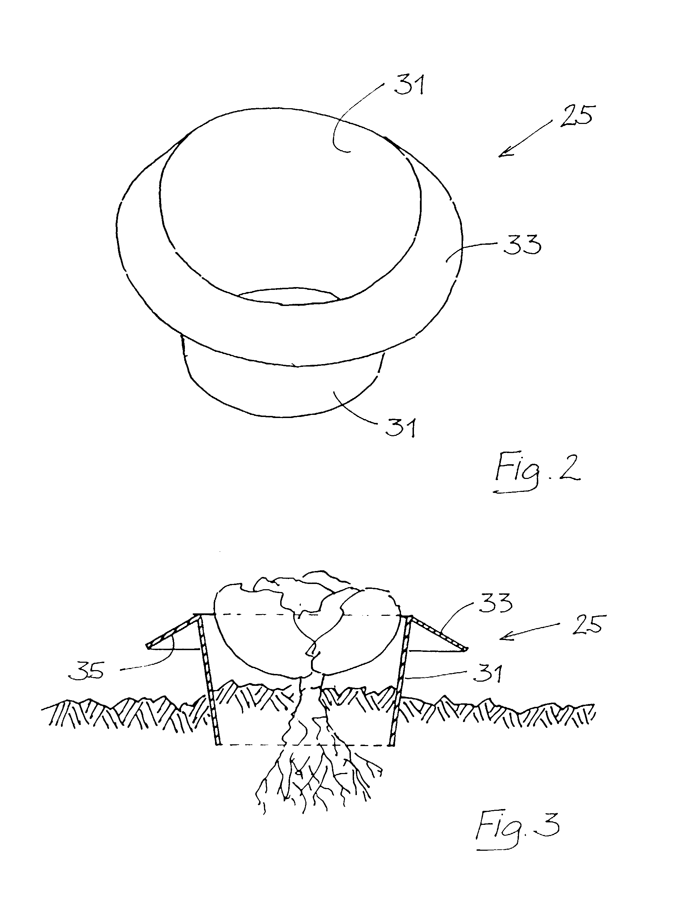

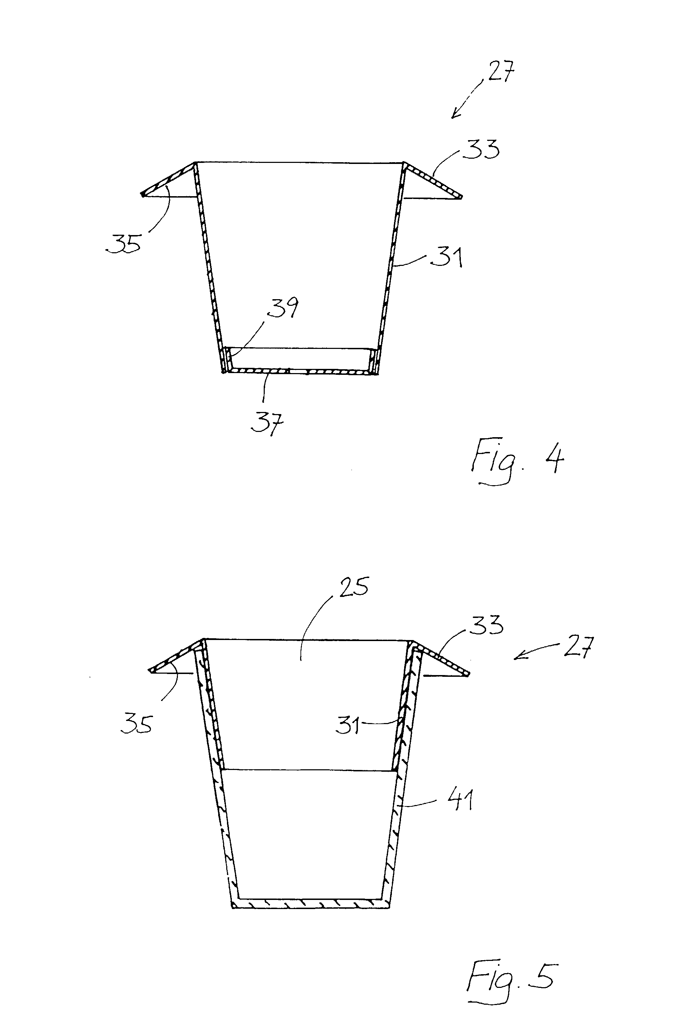

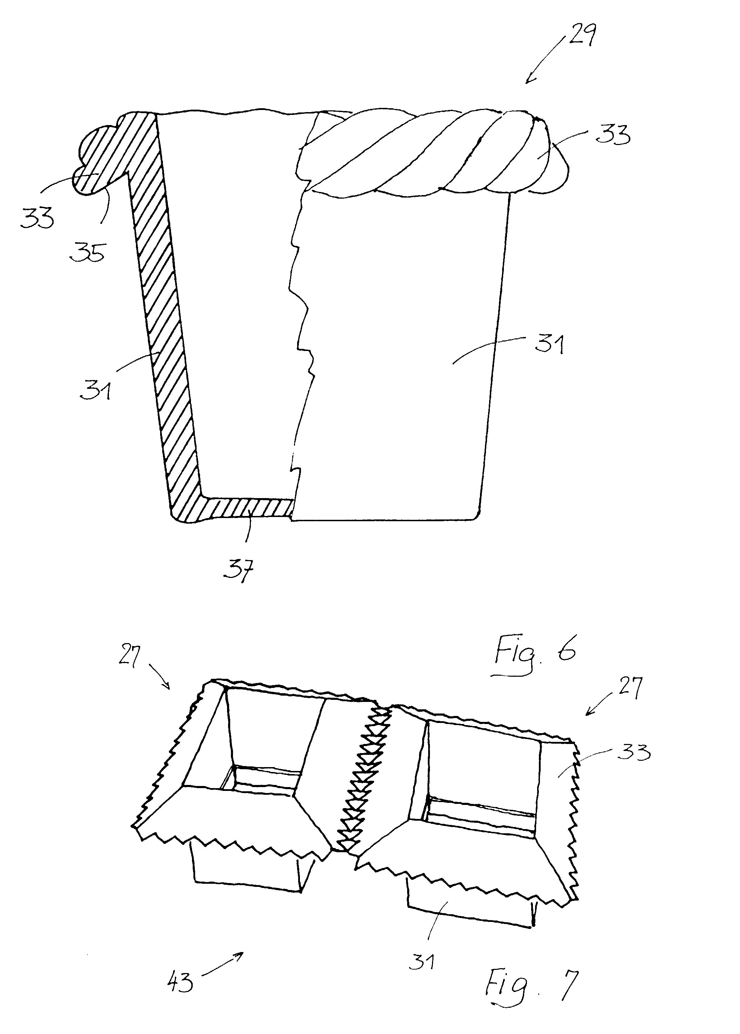

Der Schutzring 25, dargestellt in den Figuren 2 und 3, sowie der Schutzring-Topf 27, dargestellt in den Figuren 4 und 5 und der Schutztopf 29 in Figur 6 weisen im Gegensatz zum Pflanzenkragen 11 einen fixen Durchmesser und Umfang auf. Eine feste Wandung 31 aus einem Kunststoff, aus widerstandsfähigem Karton, Keramik, Ton, zementgebundenem Fasermaterial oder dergleichen weist an ihrem oberen Rand eine Auskragung oder einen Kragen 33 auf. Die Unterseite 35 dieser Auskragung 33 weist gegen aussen und unten. In der Regel erweist sich eine Neigung von 30° bis 60° als zweckmässig. Die Auskragung 33 beträgt in der Regel etwa 2 bis 4 cm, es genügt mitunter aber auch schon 1 Zentimeter.

Figur 4 zeigt, wie ein Schutzring-Topf 27 gebildet wird, wenn ein Boden 37 mit einem kleinen Rand 39 von oben in den Schutzring 25 eingesetzt wird. Dieser Boden kann nun von unten hochgedrückt und so gelöst werden. Ist eine Pflanze im Schutzring-Topf 27 gemäss Fig. 4 eingepflanzt, so kann diese durch Druck auf den Boden 37 aus dem Topf gehoben werden mitsamt dem Boden 37 und ihrem Wurzelpaket. Danach kann der Boden 37 entfernt und die Pflanze mit dem Wurzelpaket in Erdreich verpflanzt werden.

Eine vorteilhafte Variante dazu bildet das in Figur 5 gezeigte Ausführungsbeispiel. Der Topf 41, z.B. aus verrottbarem Material wie Torf oder Zellulosefasern oder dergleichen gefertigt, ist an seinem oberen Rand mit einem Schutzring 25 verstärkt und bildet mit diesem zusammen einen Schutzring-Topf 27. Grosse Torftöpfe sind ohne Verstärkung sehr leicht verletzbar und fallen dann auseinander. Durch den Schutzring 25 im oberen Bereich erhält der Torftopf 41 grössere Festigkeit und ist länger haltbar. Zudem und vor Allem bildet aber der Schutzring 25 von Anfang an und auch nach dem Verpflanzen des Schutzring-Topfes 27 in das Erdreich, einen wirksamen Schutz gegen Schneckenfrass.

Eine Alternative zum Einstecken eines Schutzringes 25 in einen Topf 41 bildet der in Figur 6 dargestellte Schutztopf 29. Er ist mit einer schneckenabweisenden Auskragung 33 versehen. Diese Auskragung 33 stellt einen gewundenen Kranz dar. Der Schutztopf 29 ist z.B. aus Ton gefertigt. Der Schutzrand oder die Auskragung 33 bildet dabei nicht nur einen Schutz vor Schneckenfrass, sondern ist auch sehr geeignet, den Topf 29 daran anzufassen um ihn zu heben. Die Auskragung 33 ist zudem sehr dekorativ gestaltbar.

Figur 7 zeigt eine Setzlingsschale 43 aus zwei Schutzringtöpfen 27 mit je einem gezackten Kragenrand 45. Die Spitzen der Zacken zweier benachbarter Schutzringtöpfe berühren sich gegenseitig. An diesen Berührungsstellen sind die Zacken miteinander verbunden und können die beiden Schutzringtöpfe 27 auseinandergebrochen werden.

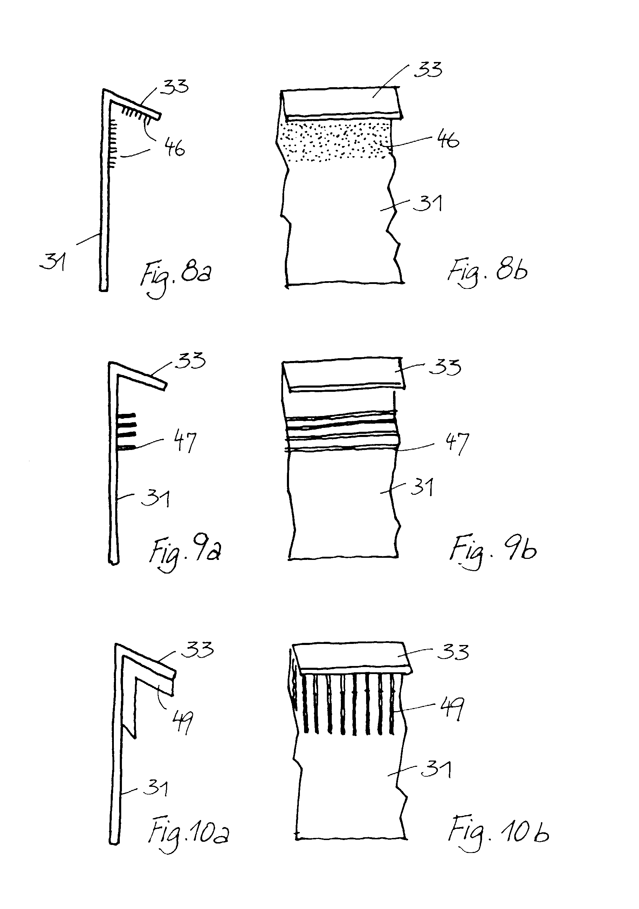

Die Figuren 8 bis 10 zeigen jeweils mit einem Querschnitt (a) und einer Teilansicht (b) drei mögliche Oberflächenstrukturen, um die Aussenseite der Wandung 31 bzw. die Unterseite des Kragens 33 schneckenabweisend zu gestalten. In Figur 8a und b sind eine Behaarung 46 gezeigt. Diese kann z.B. durch Aufkleben eines Gewebebandes mit Samt-, Plüsch- oder Klettverschlussoberfläche erreicht werden. In ähnlicher Art ist eine Velourbeschichtung möglich.

Figur 9 zeigt horizontale Rippen 47 an der Wandung 31, Figur 10 vertikale Rippen 49 an Wandung 31 und Kragen 33. Die Rippen, insbesondere die vertikalen Rippen 49, weisen vorzugsweise Abstände auf, welche so klein sind, dass Schnecken nicht zwischen die Rippen 47,49 hineinkriechen können.

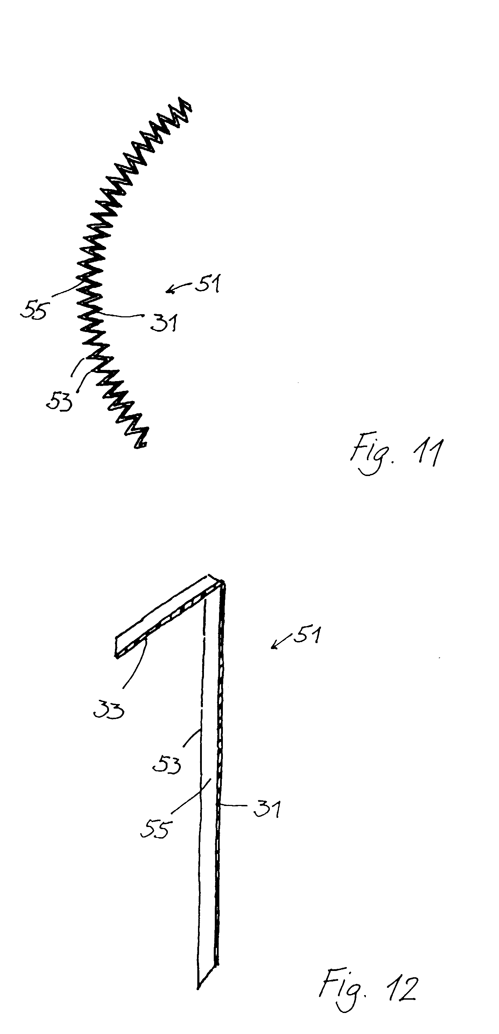

Figuren 11 und 12 zeigen einen Schutzring 51 mit im Zickzack geführter Wandung 31 und ebenfalls im Zickzack geführtem Kragen 33. Die Winkeländerungen in der Wandung 31 sind mit Vorteil sehr häufig und gegen 180 Grad, so dass die vertikalen Kanten 53 sehr nahe nebeneinander liegen. Dadurch müssen die Schnecken auf den Kanten 53 kriechen, auf welchen sie nicht genügend Halt finden, um das Hindernis des Kragens 33 zu überwinden. Dank der Falten in der Wandung 31 ist die Stabilität der Wandung 31 erhöht, bzw. kann die Wandstärke vermindert sein. bei verminderter Wandstärke ist eine im Zickzack geführte Kunststoffwandung jedoch etwas dehnbar.

Der Durchmesser des Schutzrings 51 ist anpassbar durch Veränderung der Abstände zwischen den Kanten 53. Dadurch kann der Schutzring 51 mit der Zunahme des Platzbedarfs der Pflanze vergrössert werden, wobei erst bei grösserer Pflanze und damit kleinerer Empfindlichkeit gegen Schneckenfrass die Kanten 53 soweit voneinander gerückt sind, dass die Schnecken auch auf den zwischen den Kanten 53 liegenden Flächen 55 kriechen können.
Um diese Flexibilität zu gewährleisten sind die Faltungen am Kragen 33 in entgegengesetzter Richtung wie die Faltungen an der Wandung. Das heisst also, dass eine nach aussen gerichtete Kante 53 der Wandung 31 in eine nach oben gerichtete Kante des Kragens 33 übergeht. Dies bewirkt auch, dass die Schnecken im Knick zwischen Wandung 31 und Kragen 33 von einer auf eine andere Kante wechseln müssen und dadurch weiter an Halt verlieren.

## Patentansprüche

1. Vorrichtung zum Schutz von Einzelpflanzen vor Schneckenfrass mit einer den Standplatz der Pflanze umlaufenden und für Schnecken undurchdringlichen Wandung, an deren oberem Ende ein umlaufender Kragen nach aussen angeordnet ist, dessen Unterseite nach aussen abfallend ausgebildet ist, dadurch gekennzeichnet, dass die Wandung (31) einen unveränderbaren Umfang und eine ausreichende Festigkeit und Steifheit zum Einstecken in Erdreich aufweist.

2. Vorrichtung nach Anspruch 1, dadurch gekennzeichnet, dass die Wandung (31) so ausgestaltet ist, dass der von ihr umfasste Innenraum nach unten konisch verengt ist.

3. Vorrichtung nach Anspruch 1 oder 2, gekennzeichnet durch einen einsetzbaren Boden (37) mit einem umlaufenden Rand (39) und einem dem Rand (39 entsprechenden Sitz in der Wandung (31).

4. Vorrichtung nach Anspruch 3, dadurch gekennzeichnet, dass Boden (37) und Rand (39) als Topf (41) ausgebildet ist, dessen Form wenigstens teilweise der Wandung (31) entspricht.

5. Vorrichtung nach Anspruch 3 oder 4, dadurch gekennzeichnet, dass der Boden (37) oder Topf (41) aus verrottbarem Material besteht.

6. Vorrichtung nach Anspruch 1 oder 2, gekennzeichnet durch einen mit der Wandung (31) zusammenhängenden Boden (37).

7. Vorrichtung nach einem der Ansprüche 1 bis 6, dadurch gekennzeichnet, dass der Kragen (33) über eine Bruchkante mit mindestens einem weiteren Kragen (33) einer Vorrichtung nach einem der Ansprüche 1 bis 5 verbunden ist.

8. Vorrichtung nach Anspruch 1 oder 2, dadurch gekennzeichnet, dass ihre Abmessungen auf die Abmessungen im Handel erhältlicher Töpfe abgestimmt sind.

9. Vorrichtung nach einem der Ansprüche 1 bis 8, dadurch gekennzeichnet, dass der Kragen (33) wenigsten 1 bis 4 cm auskragt und wenigstens 30° nach unten geneigt ist.

10. Vorrichtung nach einem der Ansprüche 1 bis 9, dadurch gekennzeichnet, dass eine für die Schnecken zugängliche Oberfläche der Vorrichtung (25,27,29,51) umlaufend wenigstens teilweise mit einer schneckenabweisenden Oberfläche (46,47,49,53) versehen ist.

11. Vorrichtung nach einem der Ansprüche 1 bis 10, dadurch gekennzeichnet, dass der äussere Rand des Kragens (33) gezackt ist.

12. Vorrichtung nach einem der Ansprüche 1 bis 11, dadurch gekennzeichnet, dass die Wandung (31) und der Kragen (33) vielfach gefaltet sind und die Wandung (31) daher in einer Zickzacklinie die Pflanze umläuft.
